# NEW EUROPEAN PATENT SPECIFICATION

(11) **EP 2 421 729 B2**
(45) Date of publication and mention of the opposition decision: **08.11.2017**
(45) Mention of the grant of the patent: 05.03.2014
(21) Application number: 09779356.6
(22) Date of filing: 24.04.2009
(51) Int. Cl.: B60S 1/38

(54) **A WINDSCREEN WIPER DEVICE**
WINDSCHUTZSCHEIBENWISCHERVORRICHTUNG
DISPOSITIF D'ESSUIE-GLACE

(43) Date of publication of application: 29.02.2012
(73) Proprietor: Federal-Mogul S.A., 6790 Aubange (BE)
(72) Inventor: BOLAND, Xavier, B-6700 Arlon (BE)
(74) Representative: Hooiveld, Arjen Jan Winfried
(86) International application number: PCT/EP2009/055007
(87) International publication number: WO 2010/121665

(56) References cited:
- EP-A- 1 514 752
- EP-A1- 2 143 602
- DE-A1- 10 038 396
- DE-A1- 10 040 129
- DE-A1- 10 210 720
- DE-A1-102006 046 875
- DE-U1-202006 009 435
- FR-A1- 2 732 287
- FR-A1- 2 866 298
- US-A- 2 613 385
- US-A- 3 428 996
- US-A- 3 480 985
- US-A- 3 480 986
- US-A1- 2002 112 306
- US-A1- 2003 167 587
- US-A1- 2008 104 784
- US-A1- 2008 127 442
- US-A1- 2008 209 662
- US-B1- 6 668 419

## Description

The invention relates to a windscreen wiper device, particularly for automobiles, comprising an elastic, elongated carrier element, as well as an elongated wiper blade of a flexible material, which can be placed in abutment with a windscreen to be wiped, which wiper blade is of the flat blade type and includes at least one groove, in which groove a longitudinal strip of the carrier element is disposed, wherein said windscreen wiper device further comprises a mounting head for transferring a reciprocal movement to said wiper blade.

It is noted that the present invention is not restricted to cars, but also refers to rail coaches and other (fast) vehicles.

Such a windscreen wiper device is known from European patent publication no. 1 514 752 (Federal-Mogul S.A.). The windscreen wiper device described in this European patent publication comprises a mounting head mountable on a drive shaft and an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin.

A disadvantage of the windscreen wiper arm known from the above European patent publication is that it comprises many complex parts with a dedicated shape, wherein reference is made to the oscillating arm described therein consisting of a plastic arm member at one end thereof pivotally connected to a mounting head by means of a pivot pin and at the other end thereof folded around a rod-like part. Obviously, this needs complex machinery, tools, with all the expenses involved.

It is an object of the invention to obviate this disadvantage, in the sense that at minimum costs - without using complex machinery and additional tools - a simple though effective windscreen wiper device is proposed which fits on all kinds of different cars.

Thereto, a windshield wiper device according to claim 1 is proposed.

The gist of the present invention is to refrain from the use of an intermediate oscillating arm, thereby avoiding an articulation between the oscillating arm and the wiper blade, as well as between the mounting head and the oscillating arm. This not only ensures that less parts have to be used in manufacturing said windscreen wiper device with all advantages involved (such as cheaper, lighter, less plastic material sensitive to UV-light), but also that disadvantages like wear are obviated. Further, by directly connecting said connecting device to the mounting head, said wiper blade is mounted closer to the windscreen to be wiped, so that the wiping properties are improved. Also, by locating the connecting device in its entirety inside said mounting head, a very strong connection between is formed that can withstand large torque. Advantageously, said connecting device and said connecting piece are connected to said wiper blade at opposite ends thereof.

United States patent publication no. 2008/0209662 (Wilms et al.) relates to a windscreen wiper arm comprising a wiper bar, to which a wiper blade can be attached with or without a spoiler. Said bar is composed of a freely projecting, first arc-shaped wiper bar section with a first curvature variation, to which the wiper blade is attached and of at least one second arc-shaped wiper bar section with a second arc-shaped curvature variation, which adjoins the first wiper bar section, to form a snap- off point. DE 10040129 A1 corresponds to the preamble of claim 1. DE 100 40 129 11 corresponds to the preamble of claim 1.

Said connecting device and said mounting head are each preferably made of one piece. The present windscreen wiper device is particularly designed for use at a rear window of a car.

Preferably, said wiper blade includes opposing longitudinal grooves on its longitudinal sides, in which grooves spaced-apart longitudinal strips of the carrier element are disposed, wherein neighbouring ends of said longitudinal strips are interconnected by said connecting device at one end of said wiper blade and by said connecting piece at the other end of said wiper blade. Said connecting device may be glued, soldered, clipped, snapped or welded onto said longitudinal strips.

In a further preferred embodiment of a windscreen wiper device in accordance with the invention said mounting head has an at least substantially U-shaped cross-section at the location of its attachment to said connecting device wherein said engaging members comprise legs of said U-shaped cross-section, and wherein each leg at the free end thereof comprises inwardly bended edges engaging around said bottom of said connecting device.

In a further preferred embodiment of a windscreen wiper device in accordance with the invention said mounting head has an at least substantially 0-shaped cross-section at the location of its attachment to said connecting device, wherein said engaging members comprise sides of said 0-shaped cross-section.

In accordance with the invention said strip and said connecting device are slidably connected by means of a snap connection.

In accordance with the invention said snap connecting comprises at least one protrusion extending laterally from a longitudinal edge of said strip, said protrusion being located between stops on the connecting device, and/or

said snap connecting comprises at least two stops extending laterally from a longitudinal edge of said strip, said stops being located on opposite sides of a protrusion on the connecting device.

In a further preferred embodiment of a windscreen wiper device in accordance with the invention said protrusion and/or said stops of said strip extend laterally from the interior or exterior edge of said strip.

In a further preferred embodiment of a windscreen wiper device in accordance with the invention said longitudinal strip is biassed in such a way that its curvature radius near the connecting device is smaller than that its curvature radius near the other end of said wiper blade, all seen in dismounted position. In other words, in dismounted position said wiper blade has an asymmetric shape, seen along its middle transverse plane perpendicular to a windscreen to be wiped. Thus, said wiper blade is able to follow any curvature of a windscreen to be wiped, while said wiper blade is pressed onto said windscreen to be wiper with sufficient force to enhance the wiping properties.

In a further preferred embodiment of a windscreen wiper device according to the invention the interconnection between the mounting head and the wiper blade does not allow any pivotal movement. In other words, in mounted position said mounting head and said connecting device cannot move relative to one another, i.e. are stationary with respect to each other.

In a further preferred embodiment of a windscreen wiper device in accordance with the invention said mounting head is fixed for rotation to a shaft, wherein said shaft is rotatable alternately in a clockwise and in a counter-clockwise sense carrying said mounting head into rotation. Thus, in turn said mounting head draws said connecting device into rotation and thereby moves said wiper blade. In the alternative, said mounting head is fixed for translation to a carriage, wherein said carriage can be translated alternately in a one linear direction and in another counter linear direction carrying said mounting head into translation. The present invention can therefore be used for circular or linear movement of said mounting head.

According to the invention said connecting device comprises at least one resilient tongue engaging in a correspondingly shaped hole provided said mounting head, and wherein said resilient tongue is movable between a outward position retaining said connecting device and the wiper blade onto said mounting head and an inward position releasing said connecting device and the wiper blade from said mounting head. In order to connect the wiper blade onto the mounting head, said resilient tongue is initially pushed in against a spring force - as if it were a push button - and then allowed to spring back into the hole provided in said mounting head, thus snapping, that is clipping the resilient tongue into the hole. By subsequently pushing in again said resilient tongue against the spring force, the connecting device and the wiper blade may be released from the mounting head. Particularly, said hole has a closed circumference. Preferably, said resilient tongue is hingeable along an hinge axis, wherein the hinge axis is orientated towards said mounting head (so that said resilient tongue opens away from said mounting head) or facing away from said mounting head near an outer edge of said joint part (so that said resilient tongue opens towards said mounting head). Particularly, said hinge axis is located at an outer edge of said connecting device.

In a further preferred embodiment of a windscreen wiper device according to the invention said hole is provided in a base of the U-shaped or O-shaped cross-section of said mounting head. In this embodiment said resilient tongue may be provided on an upper part of said connecting device. In addition thereto or instead thereof the connecting device may be provided with at least two lateral resilient tongues extending outwardly, wherein each tongue engages in a correspondingly shaped hole provided in each leg of the U-shaped or O-shaped cross-section of said mounting head. Said holes preferably have a closed circumference. Such closed holes enhance the retention of the connection device onto the mounting head in all possible directions, particularly both horizontally and vertically.

The invention will now be explained in more detail with reference to figures illustrated in a drawing, wherein:
- Figure 1 is a perspective, schematic and exploded view of a preferred embodiment of a windscreen wiper device in accordance with the invention;
- Figure 2 shows several perspective, schematic views of a mounting head as used in figure 1;
- Figure 3 shows various successive steps for fitting the connecting device and the mounting head of figure 2 together;
- Figure 4 is a perspective, schematic and exploded view of another preferred embodiment of a windscreen wiper device in accordance with the invention;
- Figure 5 relates to several views of a connecting device of figures 1 and 4.

The windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biassed in a curved position (the curvature in operative position being that of a windscreen to be wiped). Neighbouring ends 5 of the strips 4 at one end of said wiper blade 2 are interconnected by means of a connecting piece 6 or "end cap" functioning as clamping member. In this embodiment, the connecting piece 6 is a separate constructional element, which may be form-locked ("positive locking" or "having a positive fit") or force-locked to the ends 5 of the strips 4. In another preferred embodiment, said connecting piece 6 is in one piece with the strips 4 made of spring band steel. In the latter case said connecting piece 6 forms a transverse bridge for the strips 4, as it were.

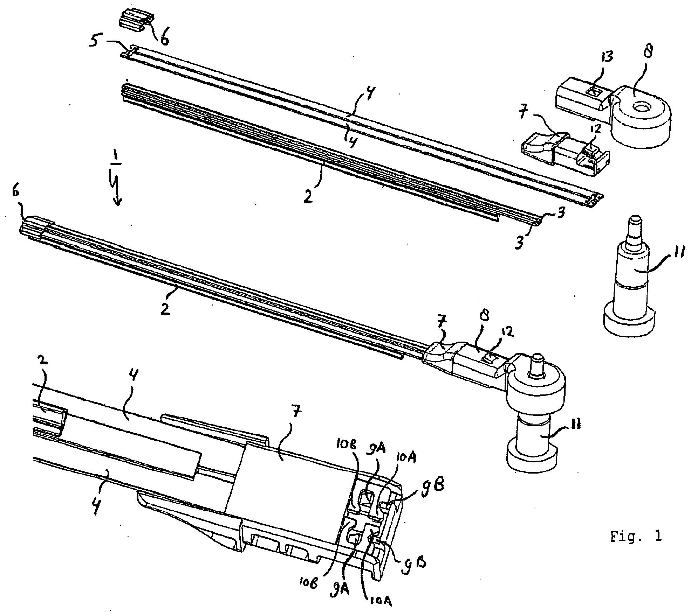

The windscreen wiper device 1 is furthermore built up of a connecting device 7 of plastic material for a mounting head 8. Alternatively, the connecting device 7 may also be made of metal, such as steel or aluminum. As can be seen, the connecting device 7 is connected to said wiper blade 2 at its other end, that is opposite the connecting piece 6. The connecting device 7 engages around strips 4 and comprises protrusions or stops 9 extending from the connecting device 7 in the direction of the bottom part of the connecting device 7, which is the part facing the windscreen (not shown). Strips 4 comprise protrusions or stops 10, extending laterally from a longitudinal edge of strips 4. In figure 1, the protrusions or stops 10 extend laterally from the exterior edge of strips 4, but they can also extend from the interior edge. Strips 4 are slidably connected to the connecting device by means of a snap connection formed by the protrusions/stops 9 of the connecting device 7 and protrusions/stops 10 of strips 4, wherein the protrusions 10A of the strips 4 extend between the stops 9 of the connecting device 7, and wherein the stops 10 of the strips 4 extend around the protrusions 9A of the connecting device 7. As a result, the connecting device 7 is firmly attached to the unit consisting of the wiper blade 2 and the strips 4.

As illustrated in figures 1 through 5 the windscreen wiper device 1 according to the invention comprises a plastic or metallic mounting head 8 which can be fixed for rotation to a shaft 11 driven, via a mechanism not illustrated, by a small motor. In use, the shaft 11 rotates alternately in a clockwise and in a counter-clockwise sense carrying the mounting head 8 into rotation also, which in turn draws the connecting device 7 in rotation and thereby moves the wiper blade 2.

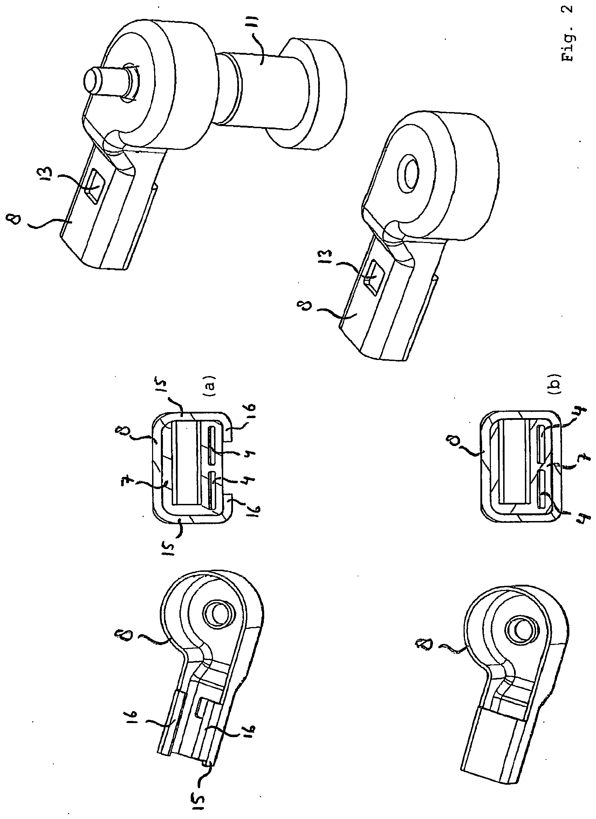

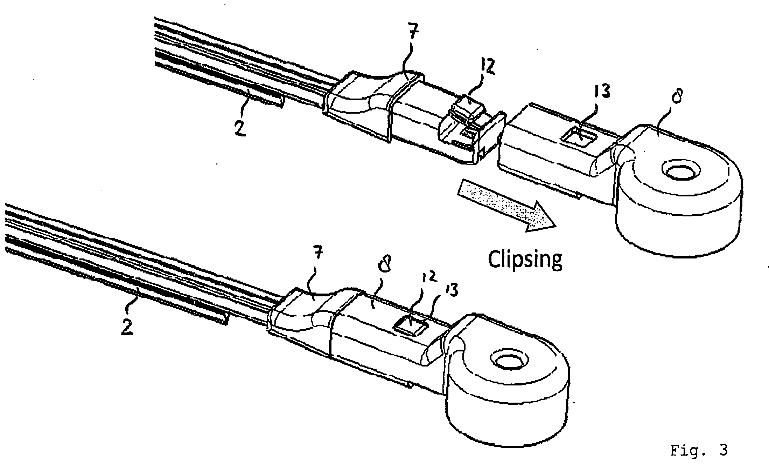

With reference to figures 2 and 3 the connecting device 7 comprises one resilient tongue 12 extending outwardly, while the mounting head 8 has an U-shaped (figure 2a) or 0-shaped (figure 2b) cross-section at the location of its connection to said connecting device 7, so that the tongue 12 engages in an identically shaped hole 13 provided in a base 14 of said U/O-shaped cross-section.

Figure 3 shows the steps of mounting the connecting device 7 with the wiper blade 2 onto the mounting head 8. The connecting device 7 can be easily slid in horizontal direction on a free end of the mounting head 8. During this sliding movement the resilient tongue 12 is initially pushed in against a spring force and then allowed to spring back into said hole 13, thus snapping, that is clipping the resilient tongue 12 into the hole 13. This is a so-called bayonet-connection. The mounting head 8 together with the connecting device 7 are then ready for use. By subsequently pushing in again said resilient tongue 12 against the spring force (as if it were a push button), the connecting device 7 together with the wiper blade 2 may be released from the mounting head 8. Dismounting the connecting device 7 with the wiper blade 2 from the mounting head 8 is thus realized by sliding the connecting device 7 together with the wiper blade 2 in a direction away from the mounting head 8.

Figure 2a shows that the U-shaped cross-section is formed by engaging members of the mounting head 8, which comprise legs 15 and inwardly bended edges 16 integral with said legs 15, wherein during use said legs 15 engage around longitudinal sides of said connecting device 7 that face away from each other and said inwardly bended edges 16 engage around the bottom part of said connecting device 7 that faces the windscreen (not shown). The bottom part can also be identified as the part facing away from the part of the connecting device 7 that comprises the resilient tongue 12. Instead of a U-shaped cross-section of the mounting head 8 it can be an 0-shaped cross-section, as seen in figure 2b, wherein engagement members engage totally around said longitudinal sides and said bottom part and wherein the engagement members thus form sides of the 0-shape. A very strong connection that can withstand large torque is formed between the mounting head 8 and the connecting device 7, due to that the connecting device 7 at the location of its attachment to the mounting head 8 is in its entirety located in the mounting head 8, because of the engaging members of the mounting head 8 engaging around longitudinal sides and the bottom part of the connecting device 7.

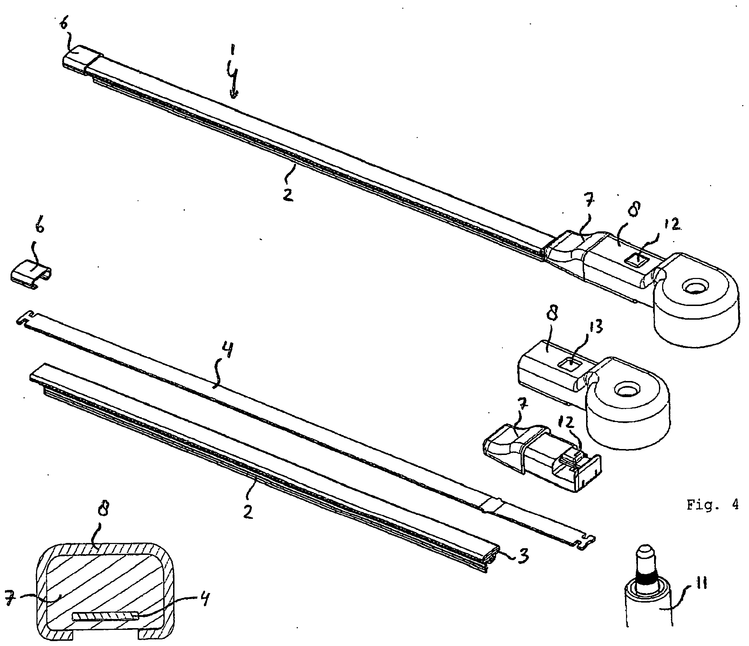

Figure 4 shows another embodiment of a windscreen wiper device 1 according to the invention, wherein a central longitudinal groove 3 is formed in the wiper blade 2, in which a single longitudinal strip 4 is fitted.

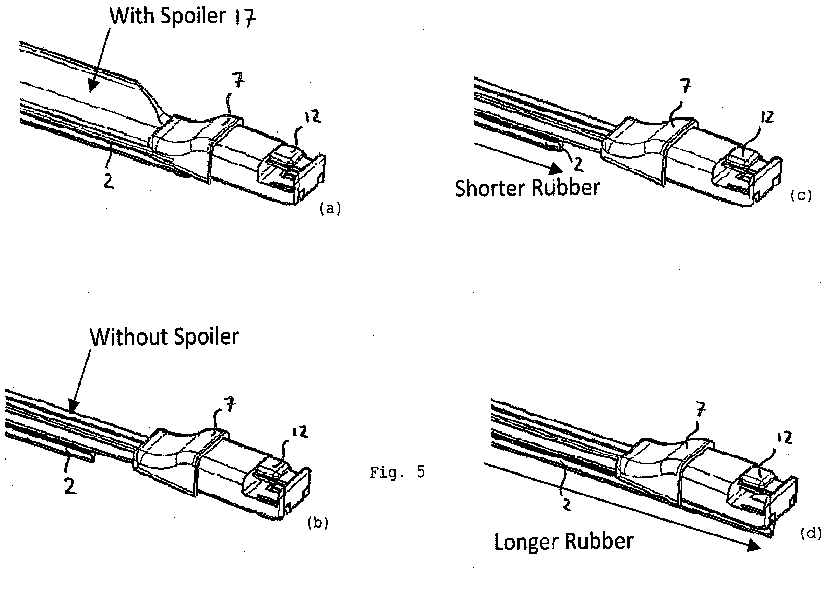

Figure 5 relates to several views of the wiper blade 2 of figures 1, 2 and 3. As can be seen, said wiper blade 2 may be equipped with or without a spoiler 17 (figures 5a and 5b), while the wiper blade 2 as such may or may not extend under said connecting device 7 (figures 5c and 5d).

The invention is not restricted to the variants shown in the drawing, but it also extends to other embodiments that fall within the scope of the appended claims.

## Claims

1. A windscreen wiper device (1), particularly for automobiles, comprising an elastic, elongated carrier element, as well as an elongated wiper blade (2) of a flexible material, which can be placed in abutment with a windscreen to be wiped, which wiper blade (2) is of the flat blade type and includes at least one groove (3), in which groove (3) a longitudinal strip (4) of the carrier element is disposed, wherein said windscreen wiper device (1) further comprises a mounting head (8) for transferring a reciprocal movement to said wiper blade (2), wherein said windscreen wiper device (1) further comprises a connecting device (7) for detachably connecting said wiper blade (2) directly to said mounting head (8), wherein said connecting device (7) is positioned near one end of said wiper blade (2), and wherein said connecting device (7), at the location of its attachment to said mounting head (8), is located in its entirety inside said mounting head (8), wherein said mounting head (8), at the location of its attachment to said connecting device (7), comprises engaging members engaging around longitudinal sides and around a bottom of said connecting device (7), so that said connecting device (7) is mounted in a channel formed by said engaging members, wherein said strip (4) and said connecting device (7) are slidably connected by means of a snap connection, wherein said snap connecting device comprises at least one protrusion (10a) extending laterally from a longitudinal edge of said strip (4), said protrusion being located between stops (9) on the connecting device (7), and/or wherein said snap connecting device comprises at least two stops (10) extending laterally from a longitudinal edge of said strip, said stops being located on opposite sides of a protrusion (9a) on the connecting device wherein said connecting device (7) comprises at least one resilient tongue (12) engaging in a correspondingly shared hole (13) provided in said mounting head (8), **characterized in that** said resilient tongue (12) is movable between a outward position retaining said connecting device (7) together with the wiper blade (2) onto said mounting head (8) and an inward position releasing said connecting device (7) together with the wiper blade (2) from said mounting head (8).

2. A windscreen wiper device (1) according to claim 1, wherein said mounting head (8) has an at least substantially U-shaped cross-section at the location of its attachment to said connecting device (7), wherein said engaging members comprise legs (15) of said U-shaped cross-section, and wherein each leg (15) at the free end thereof comprises inwardly bended edges (16) engaging around said bottom of said connecting device (7).

3. A windscreen wiper device (1) according to claim 1, wherein said mounting head (8) has an at least substantially O-shaped cross-section at the location of its attachment to said connecting device (7), wherein said engaging members comprise sides of said O-shaped cross-section.

4. A windscreen wiper device (1) according to claim 1, 2 or 3, wherein said protrusion and/or said stops (10) of said strip (4) extend laterally from the interior or exterior edge of said strip (4).

5. A windscreen wiper device (1) according to any of the preceding claims 1 through 4, wherein said windscreen wiper device (1) further comprises a connecting piece (6) positioned near the other end of said wiper blade (2) and connected to one end of said longitudinal strip (4) .

6. A windscreen wiper device (1) according to any of the preceding claims 1 through 5, wherein said longitudinal strip (4) is biassed in such a way that its curvature near the connecting device (7) is larger than its curvature near the other end of said wiper blade (2).

7. A windscreen wiper device (1) according to any of the preceding claims 1 through 6, wherein the interconnection between the mounting head (8) and the wiper blade (2) does not allow any pivotal movement.

8. A windscreen wiper device (1) according to any of the preceding claims 1 through 7, wherein said mounting head (8) is fixed for rotation to a shaft (9), and wherein said shaft (9) is rotatable alternately in a clockwise and in a counter-clockwise sense carrying said mounting head (8) into rotation.

9. A windscreen wiper device (1) according to any of the preceding claims 1 through 8, wherein said mounting head (8) is fixed for translation to a carriage, and wherein said carriage can be translated alternately in a one linear direction and in another counter linear direction carrying said mounting head (8) into translation.

10. A windscreen wiper device (1) according to any of the preceding claims, wherein said hole (13) is provided in a base (14) of the U-shaped or 0-shaped cross-section of said mounting head (8).

## Patentansprüche

1. Scheibenwischervorrichtung (1), insbesondere für Automobile, umfassend ein elastisches, längliches Trägerelement sowie ein längliches Wischerblatt (2) aus flexiblem Material, das anliegend an eine zu wischende Windschutzscheibe platziert werden kann, wobei das Wischerblatt (2) vom Flachblatttyp ist und mindestens eine Rille (3) aufweist, wobei in der Rille (3) ein länglicher Streifen (4) des Trägerelements angeordnet ist, wobei die Scheibenwischervorrichtung (1) weiter einen Befestigungskopf (8) zum Übertragen einer Hin- und Her-Bewegung auf das Wischerblatt (2) umfasst, wobei die Scheibenwischervorrichtung (1) weiter eine Verbindungsvorrichtung (7) zum lösbaren Verbinden des Wischerblatts (2) direkt an dem Befestigungskopf (8) umfasst, wobei die Verbindungsvorrichtung (7) sich nahe an einem Ende des Wischerblatts (2) befindet, und wobei die Verbindungsvorrichtung (7), am Ort ihrer Befestigung an dem Befestigungskopf (8), sich vollständig innerhalb des Befestigungskopfes (8) befindet, wobei der Befestigungskopf (8), am Ort seiner Verbindung mit der Verbindungsvorrichtung (7), Eingriffelemente umfasst, die um Längsseiten und um eine Unterseite der Verbindungsvorrichtung (7) herum eingreifen, so dass die Verbindungsvorrichtung (7) in einem Kanal angebracht ist, der durch die Eingriffselemente gebildet wird,
wobei der Streifen (4) und die Verbindungsvorrichtung (7) gleitend miteinander verbunden sind mittels einer Einrastverbindung, wobei die Einrastverbindungsvorrichtung mindestens einen Vorsprung (10a) umfasst, der sich seitlich von einer Längskante des Streifens (4) erstreckt, wobei der Vorsprung sich zwischen Rasten (9) an der Verbindungsvorrichtung (7) befindet, und/oder wobei die Einrastverbindungsvorrichtung mindestens zwei Rasten (10) umfasst, die sich seitlich von einer Längskante des Streifens erstrecken, wobei die Rasten sich auf entgegengesetzten Seiten eines Vorsprungs (9a) an der Verbindungsvorrichtung befinden, wobei die Verbindungsvorrichtung (7) mindestens eine federnde Zunge (12) umfasst, die in ein entsprechend geformtes Loch (13) eingreift, das in dem Befestigungskopf (8) vorgesehen ist, **dadurch gekennzeichnet, dass** die federnde Zunge (12) zwischen einer äußeren Position zum Halten des Wischerblatts (2) auf dem Befestigungskopf (8) und einer inneren Position zum Lösen des Wischerblatts (2) von dem Befestigungskopf (8) beweglich ist.

2. Scheibenwischervorrichtung (1) nach Anspruch 1, wobei der Befestigungskopf (8) einen zumindest im wesentlichen U-förmigen Querschnitt am Ort seiner Befestigung mit der Verbindungsvorrichtung (7) aufweist, wobei die Eingriffselemente Schenkel (15) des U-förmigen Querschnitts umfassen, und wobei jeder Schenkel (15) an seinem freien Ende nach innen gebogene Kanten (16) umfasst, die um die Unterseite der Verbindungsvorrichtung (7) herum eingreifen.

3. Scheibenwischervorrichtung (1) nach Anspruch 1, wobei der Befestigungskopf (8) einen zumindest im wesentlichen O-förmigen Querschnitt am Ort seiner Befestigung mit der Verbindungsvorrichtung (7) aufweist, wobei die Eingriffselemente Seiten des O-förmigen Querschnitts umfassen.

4. Scheibenwischervorrichtung (1) nach Anspruch 1, 2 oder 3, wobei der Vorsprung und/oder die Rasten (10) des Streifens (4) sich seitlich von der inneren oder äußeren Kante des Streifens (4) erstrecken.

5. Scheibenwischervorrichtung (1) nach einem der Ansprüche 1 bis 4, wobei die Scheibenwischervorrichtung (1) weiter ein Verbindungsstück (6) umfasst, das nahe am anderen Ende des Wischerblatts (2) angeordnet ist und mit einem Ende des länglichen Streifens (4) verbunden ist.

6. Scheibenwischervorrichtung (1) nach einem der vorhergehenden Ansprüche 1 bis 5, wobei der längliche Streifen (4) so vorgespannt ist, dass seine Krümmung in der Nähe der Verbindungsvorrichtung (7) größer ist als seine Krümmung in der Nähe des anderen Endes des Wischerblatts (2).

7. Scheibenwischervorrichtung (1) nach einem der vorhergehenden Anspürche 1 bis 6, wobei die Verbindung zwischen dem Befestigungskopf (8) und dem Wischerblatt (2) keine Schwenkbewegung erlaubt.

8. Scheibenwischervorrichtung (1) nach einem der vorhergehenden Ansprüche 1 bis 7, wobei der Befestigungskopf (8) zur Drehung an einem Schaft (9) befestigt ist, und wobei der Schaft (9) wechselweise im Uhrzeigersinn und gegen den Uhrzeigersinn gedreht werden kann und so den Befestigungskopf (8) in Rotation versetzt.

9. Scheibenwischervorrichtung (1) nach einem der vorhergehenden Ansprüche 1 bis 8, wobei der Befestigungskopf (8) zur Verschiebung auf einem Schlitten befestigt ist, und wobei der Schlitten wechselweise in einer linearen Richtung und in einer anderen linearen Gegenrichtung verschoben werden kann, so dass er den Befestigungskopf (8) verschiebt.

10. Scheibenwischervorrichtung (1) nach einem der vorhergehenden Ansprüche, wobei das Loch (13) in einer Basis (14) des U-förmigen oder O-förmigen Querschnitts des Befestigungskopfes (8) bereitgestellt ist.

## Revendications

1. Dispositif d'essuie-glace (1), en particulier pour automobiles, comprenant un élément de support allongé élastique, ainsi qu'un balai d'essuie-glace allongé (2) en matériau flexible, qui peut être placé en butée avec un pare-brise à essuyer, lequel balai d'essuie-glace (2) est du type balai plat et comprend au moins une rainure (3), dans laquelle rainure (3), est disposée une bande longitudinale (4) de l'élément de support, dans lequel ledit dispositif d'essuie-glace (1) comprend en outre une tête de montage (8) pour transférer un mouvement de va-et-vient audit balai d'essuie-glace (2), dans lequel ledit dispositif d'essuie-glace (1) comprend en outre un dispositif de raccordement (7) pour raccorder, de manière détachable, ledit balai d'essuie-glace (2) directement à ladite tête de montage (8), dans lequel ledit dispositif de raccordement (7) est positionné à proximité d'une extrémité dudit balai d'essuie-glace (2), et dans lequel ledit dispositif de raccordement (7), à l'emplacement de sa fixation sur ladite tête de montage (8), est positionné dans son intégralité, à l'intérieur de ladite tête de montage (8), dans lequel ladite tête de montage (8), à l'emplacement de sa fixation audit dispositif de raccordement (7), comprend des éléments de mise en prise se mettant en prise autour des côtés longitudinaux et autour d'un fond dudit dispositif de raccordement (7), de sorte que ledit dispositif de raccordement (7) est monté dans un canal formé par lesdits éléments de mise en prise, dans lequel ladite bande (4) et ledit dispositif de raccordement (7) sont raccordés, de manière coulissante, au moyen d'un raccordement par encliquetage, dans lequel ledit dispositif de raccordement par encliquetage comprend au moins une saillie (10a) s'étendant latéralement à partir d'un bord longitudinal de ladite bande (4), ladite saillie étant positionnée entre des butées (9) sur le dispositif de raccordement (7), et/ou dans lequel ledit dispositif de raccordement par encliquetage comprend au moins deux butées (10) s'étendant latéralement à partir d'un bord longitudinal de ladite bande, lesdites butées étant positionnées sur les côtés opposés d'une saillie (9a) sur le dispositif de raccordement, dans lequel ledit dispositif de raccordement (7) comprend au moins une languette résiliente (12) se mettant en prise dans un trou formé de manière correspondante (13) prévu dans ladite tête de montage (8), **caractérisé en ce que** ladite languette résiliente (12) est mobile entre une position vers l'extérieur retenant ledit dispositif de raccordement (7) conjointement avec le balai d'essuie-glace (2) sur ladite tête de montage (8) et une position vers l'intérieur libérant ledit dispositif de raccordement (7) conjointement avec le balai d'essuie-glace (2) de ladite tête de montage (8).

2. Dispositif d'essuie-glace (1) selon la revendication 1, dans lequel ladite tête de montage (8) a une section transversale au moins sensiblement en forme de U à l'emplacement de sa fixation avec ledit dispositif de raccordement (7), dans lequel lesdits éléments de mise en prise comprennent des pattes (15) de ladite section transversale en forme de U, et dans lequel chaque patte (15), au niveau de son extrémité libre, comprend des bords pliés vers l'intérieur (16) se mettant en prise autour dudit fond dudit élément de raccordement (7).

3. Dispositif d'essuie-glace (1) selon la revendication 1, dans lequel ladite tête de montage (8) a une section transversale au moins sensiblement en forme de O à l'emplacement de sa fixation avec ledit dispositif de raccordement (7), dans lequel lesdits éléments de mise en prise comprennent des côtés de ladite section transversale en forme de O.

4. Dispositif d'essuie-glace (1) selon la revendication 1, 2 ou 3 dans lequel ladite saillie et/ou lesdites butées (10) de ladite bande (4) s'étendent latéralement à partir du bord intérieur ou extérieur de ladite bande (4).

5. Dispositif d'essuie-glace (1) selon l'une quelconque des revendications 1 à 4, dans lequel ledit dispositif d'essuie-glace (1) comprend en outre une pièce de raccordement (6) positionnée à proximité de l'autre extrémité dudit balai d'essuie-glace (2) et raccordée à une extrémité de ladite bande longitudinale (4).

6. Dispositif d'essuie-glace (1) selon l'une quelconque des revendications 1 à 5, dans lequel ladite bande longitudinale (4) est sollicitée de sorte que sa courbure, à proximité du dispositif de raccordement (7), est plus importante que sa courbure à proximité de l'autre extrémité dudit balai d'essuie-glace (2).

7. Dispositif d'essuie-glace (1) selon l'une quelconque des revendications 1 à 6, dans lequel l'interconnexion entre la tête de montage (8) et le balai d'essuie-glace (2) ne permet pas de mouvement pivotant.

8. Dispositif d'essuie-glace (1) selon l'une quelconque des revendications 1 à 7, dans lequel ladite tête de montage (8) est fixée, pour la rotation, à un arbre (9), et dans lequel ledit arbre (9) peut tourner de manière alternée dans le sens des aiguilles d'une montre et dans le sens inverse des aiguilles d'une montre portant ladite tête de montage (8) en rotation.

9. Dispositif d'essuie-glace (1) selon l'une quelconque des revendications 1 à 8, dans lequel ladite tête de montage (8) est fixée, pour la translation, à un chariot, et dans lequel ledit chariot peut effectuer un mouvement de translation de manière alternée dans une direction linéaire et dans une autre direction linéaire opposée portant ladite tête de montage (8) en translation.

10. Dispositif d'essuie-glace (1) selon l'une quelconque des revendications précédentes, dans lequel ledit trou (13) est prévu dans une base (14) de la section transversale en forme de U ou en forme de O de ladite tête de montage (8).
